# EUROPEAN PATENT APPLICATION

(11) **EP 2 685 013 A1**
(43) Date of publication of application: **15.01.2014**
(21) Application number: 12176031.8
(22) Date of filing: 11.07.2012
(51) Int. Cl.: E03C 1/122, E03F 5/08, F16K 17/19

(54) **Pressure regulating device and use thereof**

(71) Applicant: Planet Patent S.A., 1746 Luxembourg (LU)
(72) Inventor: Kovács, József, H-1055 Budapest (HU)
(74) Representative: Kovari, Zoltan

(57) **Abstract**

The invention relates to a pressure regulating device (100) characterised by comprising
- a tubular gas regulating body (200) having an upper portion (200a) wherein at least one gas volume regulating slot (201) is formed,
- a gas volume regulator (203) having a circular cover (203a) and a cylindrical wall (203b) projecting downwardly therefrom, and the outer cross section of the cylindrical wall (203b) corresponds to the inner cross section of the upper portion (200a) of the gas regulating body (200), and at least one gas volume regulating slot (201) is formed in the cylindrical wall (203b), and
- a flexible valve (205) formed as a hollow closed cylinder the outer cross section of which corresponds to the inner cross section of the cylindrical wall (203b) of the gas volume regulator (203),
and the gas volume regulator (203) is rotateably fitted into the upper portion (200a) of the gas regulating body (200) such that the gas volume regulating slot (201) of the gas regulating body (200) and the gas volume regulating slot (201) of the gas volume regulator (203) can be brought to overlap each other by rotating the gas volume regulator (203) within the gas regulating body (200); and the flexible valve (205) is secured to the circular cover (203a) of the gas volume regulator (203) such that the flexible valve (205) fills out the volume of the gas volume regulator (203).

## Description

The present invention relates to a pressure regulating device and the use of such device in a closed sewage network.

In closed systems where gas may be generated the pressure conditions need to be regulated. In particular, sewage networks may be formed as a closed system in which case gas is generated in the sewage network that needs to be extracted. Accordingly a pressure regulating device is needed to regulate the negative pressure (slight vacuum) during extraction of the generated gasses.

There is a present technical solution in use to overcome this problem. It is a gas intake device (also called air discharge valve), which reacts to vacuum suction against spring pressure. It comprises valves reacting to gaseous materials, liquids and overpressure, which open or close with the help of an external power source. The device may be run by the external power of an engine where suction and pressure is provided by a single system. Power may also be provided by a liquid pump system, e.g. a Worthington pump. However, the power source increases the costs of the device as well as the costs of operation. The complicated structure and operation of the device is a further drawback.

It is an object of the present invention to overcome the problems associated with the prior art. In particular, it is an object of the invention to provide a pressure regulating device that has a simple mechanical structure and does not need a power source to operate.

The above objects are achieved by a pressure regulating device according to claim 1.

In the case of sewage networks gas is not the only substance that may try to break out. In case of heavy precipitation gully swells may occur which could flood conventional pressure regulators and would not stop the sewage water from bursting out.

Hence, in a second aspect of the invention it is a further object to provide the pressure regulating device for regulating gas pressure and which is provided with protection against flooding and with means for retaining swelling water.

The above objects are achieved by a pressure regulating device according to claim 2 and the use of such device in accordance with claim 8.

Further advantageous embodiments of the invention are defined in the attached dependent claims.

Further details of the invention will be apparent from the accompanying figures and exemplary embodiments.
Fig. 1 a is a cross sectional side view of a gas regulating body according to the invention.
Fig. 1b is a sectional view of the gas regulating body taken along line A-A of Fig. 1 a.
Fig. 1c is a cross sectional view of an anti-swell valve assembly according to the invention.
Fig. 1d is a top view of the valve assembly according to Fig. 1 c.
Fig. 1e is a sectional view of the anti-swell valve assembly taken along line A-A of Fig. 1c showing a perforated plate.
Fig. 1f is a side view of a spacer employed in the anti-swell valve assembly.
Fig 1g is a partially broken side view of the valve assembly from direction E of Fig. 1 e.
Fig 2a is a cross sectional side view of a gas volume regulator according to the invention.
Fig. 2b is a top view of the gas volume regulator according to Fig. 2a.
Fig. 2c is a sectional view of the gas volume regulator taken along line A-A of Fig. 2a.
Fig. 2d is a top view and side view of a fastening cover of a flexible valve according to the invention.
Fig. 2e is a partially cut-out side view of a flexible valve showing the position of the fastening cover within the flexible valve.
Fig. 2f is a top view of the flexible valve according to Fig. 2e.
Fig. 3a is a cross sectional view of a pressure regulating device according to the invention.
Fig. 3b is a top view of the outer cover of the pressure regulating device according to Fig. 3a.
Fig. 3c is a sectional view of the pressure regulating device taken along line A-A of Fig. 3a.
Fig. 3d is a side view of the gas regulating body according to Fig. 3a indicating hidden parts with dashed lines.
Fig. 3e is a sectional view of the pressure regulating device taken along line B-B of Fig. 3d and shows a perforated plate with a ball valve placed thereon.
Fig. 4a is a side view of a gas volume regulator with a flexible valve arranged therein in accordance with the invention.
Fig. 4b is a sectional view taken along line A-A of Fig. 4a.
Fig. 4c is a semi-sectional side view of the pressure regulating device with the flexible valve being in static condition.
Fig. 4d is a semi-sectional side view of the pressure regulating device with the flexible valve being under negative pressure.
Fig. 4e is a semi-sectional side view of the pressure regulating device with the flexible valve being under positive pressure.

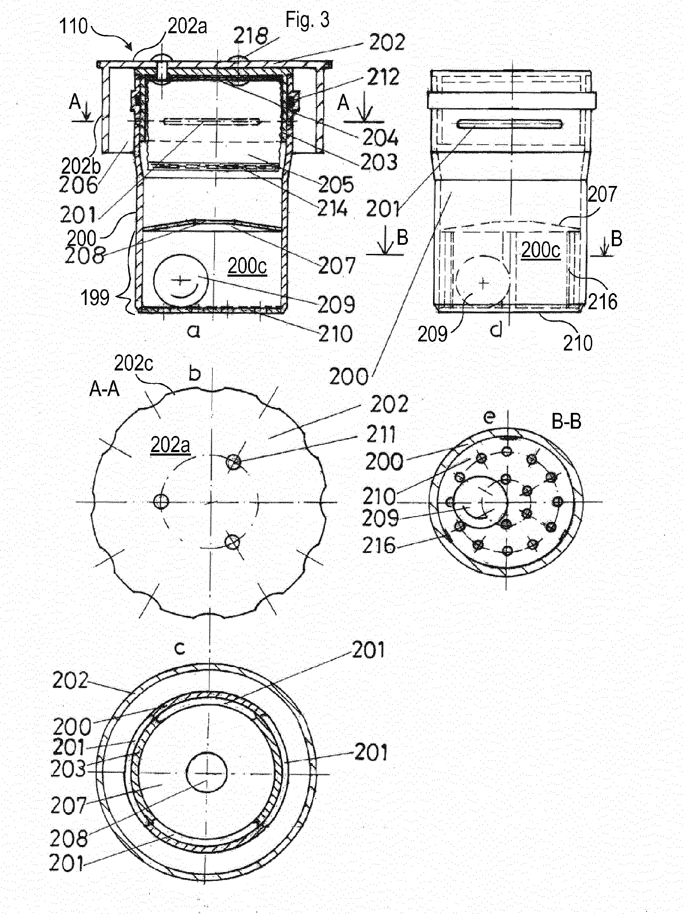

A preferred embodiment of the pressure regulating device 100 according to the invention is illustrated in Fig. 3a. The pressure regulating device 100 comprises a tubular gas regulating body 200, a gas volume regulator 203, a flexible valve 205, and preferably an anti-swell valve assembly 199. It should be noted that in sewage applications, as will be described later on, the gas is generally air.

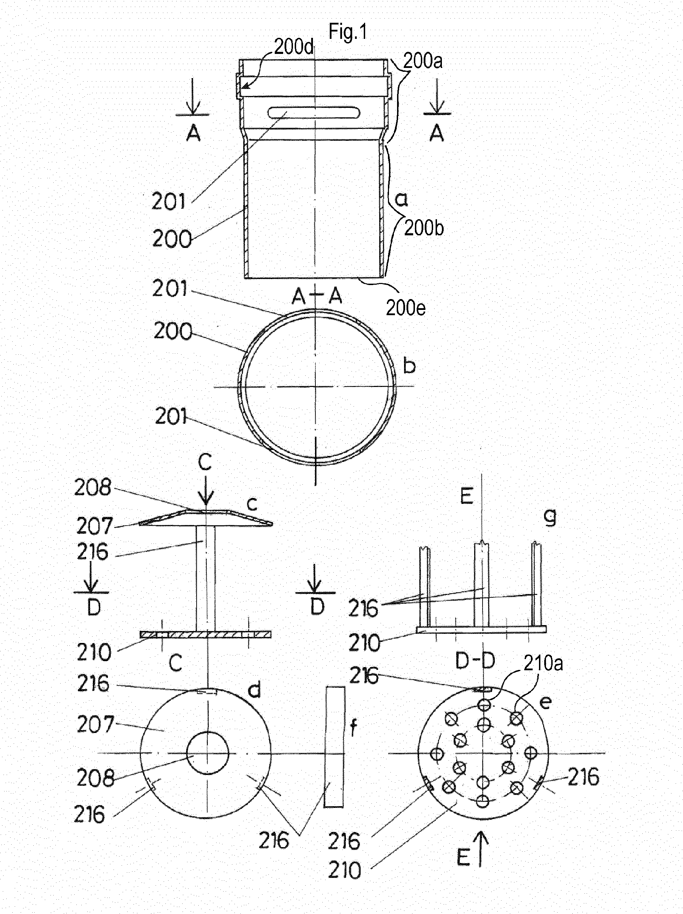

The gas regulating body 200 and its anti-swell valve assembly 199 are depicted in Figs. 1a - 1g. The tubular gas regulating body 200 has an upper portion 200a and a lower portion 200b. The upper portion 200a can be of a greater cross-section than the lower portion 200b for facilitating housing of the gas volume regulator 203 therein. At least one gas volume regulating slot 201 is formed in the side wall of the upper portion 200a for allowing gas communication there through. Preferably two gas volume regulating slots 201 are formed on opposing sides of the upper portion 200a (i.e. rotated by 180 degrees) as shown in the sectional view of Fig. 1b. The gas volume regulating slots 201 are preferably horizontal slits which, in a particularly advantageous embodiment, may cover the half of the whole circumference of the upper portion 200a.

The upper portion 200a may further comprise a circular groove 200d for receiving a gasket 212 therein (see Fig. 3a).

The anti-swell valve assembly 199 is arranged in the lower portion 200b of the gas regulating body 200 (see Fig. 3a). In a preferred embodiment the anti-swell valve assembly 199 comprises a perforated plate 210, which is arranged preferably in the vicinity of a lower end 200e of the lower portion 200b so as to close off the lower portion 200b in order to protect the anti-swell valve assembly 199 from debris and the like in case of a gully swell.

The valve assembly 199 further comprises a valve plate 207 having a valve seat 208 therein. The valve plate 207 is arranged above the perforated plate 210 spaced apart therefrom, whereby an inner space 200c is defined within the lower portion 200b (see Figs. 3a and 3d). Spacing the valve plate 207 apart from the perforated plate 210 can be achieved in any known way, for example by using spacers 216 (Fig. 1c), preferably three spacers 216 as shown in Fig. 1g. It is also possible to attach the perforated plate 210 and the valve plate 207 directly to the wall of the lower portion 200b in which case no spacers 216 are needed. A variety of further possibilities will be apparent to a person skilled in the art.

The valve assembly 199 further comprises a ball valve 209 disposed in the inner space 200c for closing off the valve seat 208 in case of water swelling (e.g. a gully swell). Accordingly the density of the ball valve 209 is chosen to be smaller than the density of water (which is the main component of sewage water). The ball valve 209 can be made of a light material (e.g. plastic) and/or it can be of a hollow construction for reducing its overall density.

The diameter of the through holes 210a of the perforated plate 210 are such as to keep debris out of the anti-swell valve assembly 199 which could otherwise be washed inside the valve assembly 199 with the rising water in case of a gully swell. The diameter of the ball valve 209 is preferably substantially greater than the through holes 210a in order to avoid the ball valve 209 getting stuck in the holes 210a or falling through them (see Fig. 3e). For example the diameter of the through holes 210a can be about 5 mm, while the diameter of the ball valve 209 can be in the order of about 30 mm. Furthermore, the number and position of the holes 210a are chosen so as to allow good gas communication through the perforated plate 210.

The valve plate 207 is preferably conical with the valve seat 208 being at the top of the cone whereby the ball valve 209 is guided to the valve seat 208 when the water rises in the inner space 200c (e.g. due to a gully swell).

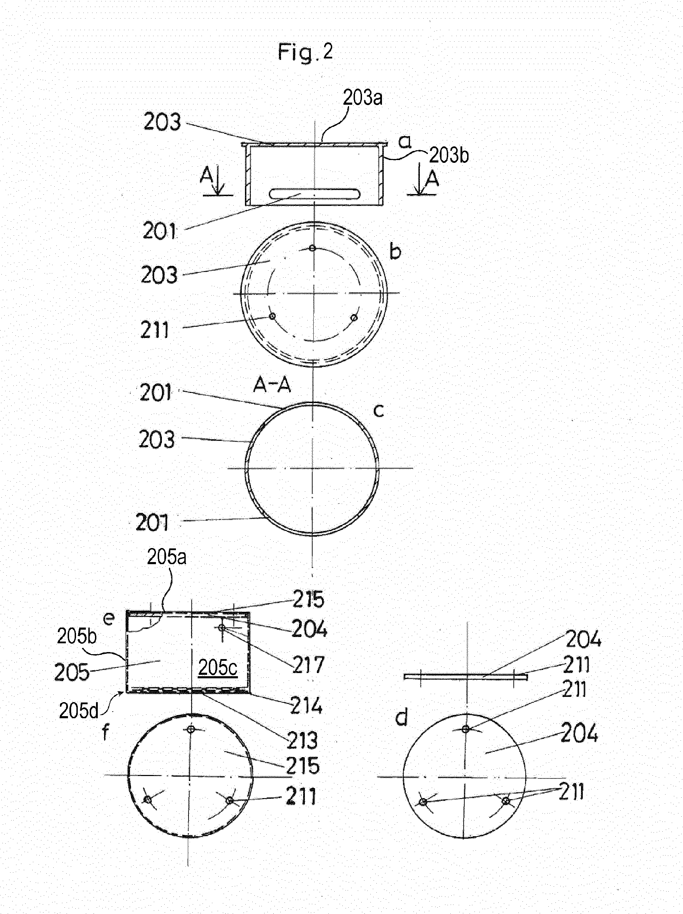

Figs. 2a - 2c depict the gas volume regulator 203 of the pressure regulating device 100 shown in Fig. 3a. The gas volume regulator 203 has a circular cover 203a and a cylindrical wall 203b projecting downwardly therefrom. The outer cross section of the cylindrical wall 203b corresponds to the inner cross section of the upper portion 200a of the gas regulating body 200 so as to fit therein. Preferably a gasket 212 is placed in the circular groove 200d of the upper portion 200a of the gas regulating body 200 which further ameliorates the fitting and stableness of the gas volume regulator 203.

At least one gas volume regulating slot 201 is formed in the cylindrical wall 203b for allowing gas communication there through. Preferably two gas volume regulating slots 201 are formed on opposing sides of the cylindrical wall 203b as shown in the sectional view of Fig. 2c. The gas volume regulating slots 201 are preferably horizontal slits which may cover in a particularly advantageous embodiment the half of the whole circumference of the cylindrical wall 203b.

The gas volume regulating slots 201 of the gas volume regulator 203 are level with the gas volume regulating slots 201 of the gas regulating body 200 when the gas volume regulator 203 is fitted in the upper portion 200a of the gas regulating body 200 as can be seen in Fig. 3c. The gas volume regulator 203 is rotateably fitted in the gas regulating body 200, and the gas volume regulating slots 201 are formed such that the gas volume regulating slots 201 are closed in a first rotational position of the gas volume regulator 203 (corresponding to a rotation by 90 degrees in the embodiment depicted in Fig. 3c) and as the gas volume regulator 203 is rotated within the gas regulating body 200 the gas volume regulating slots 201 overlap and become thereby partly or fully open allowing gas communication through the cylindrical wall 203b of the gas volume regulator 203 and the tubular wall of the upper portion 200a of the air intake body 200.

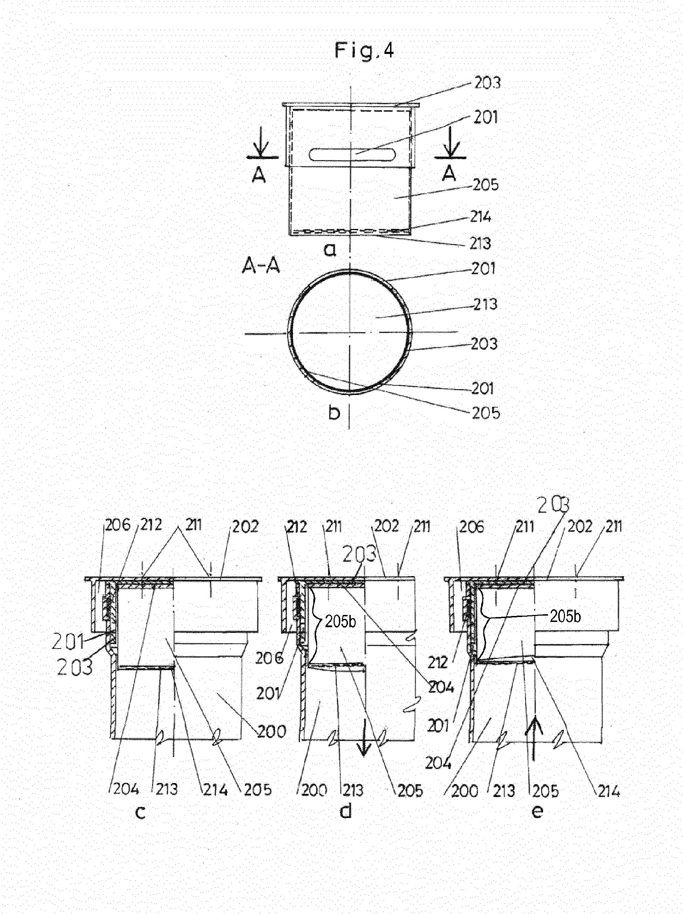

The flexible valve 205 is formed as a hollow closed cylinder (see Figs. 2e and 2f) having a cylinder top 205a a mantle 205b and a circular bottom 213 which together define an inner volume 205c. The outer cross section of the mantle 205b corresponds to the inner cross section of the cylindrical wall 203b of the gas volume regulator 203 in order to fit therein. The flexible valve 205 is secured to the circular cover 203a of the gas volume regulator 203 such that the flexible valve 205 fills out the volume of the gas volume regulator 203 as shown in Figs. 4a and 4b.

The flexible valve 205 is preferably provided with loading weight 214 at a lower perimeter 205d of its mantle 205b (i.e. around its circular bottom 213) in order to pull down the cylindrical mantle 205b. The loading weight 214 can be secured e.g. in a seam edge at the lower perimeter 205d or in any other known way. In case the loading weight 214 is held in a seam edge, the loading weight 214 can be advantageously a chain, pieces of ceramics or a plurality of separate weights.

The flexible valve 205 preferably comprises a gas opening 217 on its mantle 205b for allowing gas (typically air) to enter or exit the inner volume 205c in case of pressure difference.

The flexible valve 205 preferably further comprises a fastening cover 204 (see Figs. 2d and 2e) that is arranged within the flexible valve 205 adjacent its cylinder top 205a. In this case the flexible valve 205 is affixed to the gas volume regulator 203 by attaching the fastening cover 204 to the circular cover 203a of the gas volume regulator 203. Preferably the same attaching means e.g. pop rivets 218 serve to attach the circular cover 203a of the gas volume regulator 203 to an outer cover 202 that covers the upper portion 200a of the gas regulating body 200 (see Fig. 3a). The outer cover 202 comprises a covering top 202a and a cylindrical wall 202b projecting downwardly therefrom. When the covering top 202a is attached to the circular cover 203a of the gas volume regulator 203 a vent 206 is formed between the outer wall of the upper portion 200a of the gas regulating body 200 and the cylindrical wall 202b of the outer cover 202. The perimeter 202c of the covering top 202a of the outer cover 202 preferably contains edges or recesses (see Fig. 3b) whereby it is easier to grab and rotate the outer cover 202. Since the covering top 202a is secured to the circular cover 203a of the gas volume regulator 203 (e.g. by pop rivets 211) rotating the covering top 202a causes the rotation of the gas volume regulator 203 within the gas regulating body 200 whereby the gas volume regulating slots 201 can be opened or closed.

The operation of the pressure regulating device 100 according to the invention will be described with reference to Figs. 4c - 4d.

Fig. 4c depicts the static state wherein the pressure conditions are the same within the gas regulating body 200 (i.e. within the sewage network to which it is connected) and the outer environment to which the vent 206 between the outer cover 202 and the air intake body 200 opens. In the static state the bottom 213 of the flexible valve 205 is level with the lower perimeter 205d of the mantle 205b of the flexible valve 205 where the loading weight 214 is provided. The mantle 205b contacts the inside of the cylindrical wall 203b of the gas volume regulator 203 whereby the gas volume regulating slots 201 of the cylindrical wall 203b are closed preventing gas communication between the inside of the gas regulating body 200 and the outer vent 206 (and thus the outer environment) irrespective of the rotational position of the gas volume regulator 203 within the gas regulating body 200.

The dynamic states of the pressure regulating device 100 relate to negative pressure (mild vacuum) and to positive pressure (overpressure) in the sewage network (and thereby in the lower portion 200b of the gas regulating body 200).

The dynamic state caused by negative pressure (see Fig. 4d) can be regarded as the normal operating condition in case of sewage networks that are formed as a closed system, since here the sewage network is preferably under negative pressure (induced e.g. by chimneys and air fans installed in the network). In this case the pressure regulating device 100 allows gas intake (typically air intake) from the outside in order to maintain a constant slight vacuum in the sewage network. The mild vacuum pulls at the bottom 213 of the flexible valve 205. Due to the contraction, the mantle 205b of the flexible valve 205 becomes detached from the inner cylindrical wall 203b of the gas volume regulator 203, whereby a controlled amount of gas (air) gets into the gas regulating body 200 through the vent 206 and the gas volume regulating slot 201, provided that the gas volume regulator 203 is rotated to an open position wherein the gas volume regulating slots 201 of the gas regulating body 200 and the gas volume regulating slots 201 of the gas volume regulator 203 overlap. Gas flow rate depends on how much the gas volume regulating slots 201 of the gas regulating body 200 and the gas volume regulator 203 overlap which can be controlled by rotating the outer cover 202 whereby the gas volume regulator 203 is also rotated with respect to the gas regulating body 200.

The gas that is drawn into the gas regulating body 200 can enter the sewage network to which the pressure regulating device 100 is connected via the opening at the valve seat 208 and the through holes 210a of the perforated plate 210 of the anti-swell valve assembly 199. As the mantle 205b of the flexible valve 205 becomes detached this also frees the gas opening 217 on the mantle 205b whereby gas (air) is drawn from the inner volume 205c of the flexible valve 205 further contributing to separation of the mantle 205b from the cylindrical wall 203b of the gas volume regulator 203.

In the other dynamic operation mode the overpressure that may occasionally develop in the sewage network (e.g. in the course of cleaning the drains or gully swells) is compensated by the pressure regulating device 100 (see Fig. 4e). The overpressure raises the bottom 213 of the flexible valve 205 whereby the mantle 205b of the flexible valve 205 becomes detached from the inner wall of the gas volume regulator 203 freeing the gas volume regulating slots 201 of the gas volume regulator 203 and the gas regulating body 200 (to the extent of the overlap between them). The overpressure is thus relieved through the gas volume regulating slots 201 and the vent 206.

The embodiment illustrated in Fig. 3a has a further operation mode for the case of sewage water swelling in the sewage network. In such a situation the sewage water enters the inner space 200c defined by the anti-swell valve assembly 199 through the holes 210a of the perforated plate 210. As the water level rises it lifts the ball valve 209 which is designed to float on the water. The cone shaped valve plate 207 guides the ball valve 209 to the valve seat 208 and the rising water presses the ball valve 209 against it, whereby the valve seat 208 is closed off and the swelling water cannot penetrate the rest of the gas regulating body 200.

The above-described embodiments are intended only as illustrating examples and are not to be considered as limiting the invention. Various modifications will be apparent to a person skilled in the art without departing from the scope of protection determined by the attached claims.

## Claims

1. Pressure regulating device (100) **characterised by** comprising
- a tubular gas regulating body (200) having an upper portion (200a) wherein at least one gas volume regulating slot (201) is formed,
- a gas volume regulator (203) having a circular cover (203a) and a cylindrical wall (203b) projecting downwardly therefrom, and the outer cross section of the cylindrical wall (203b) corresponds to the inner cross section of the upper portion (200a) of the gas regulating body (200), and at least one gas volume regulating slot (201) is formed in the cylindrical wall (203b), and
- a flexible valve (205) formed as a hollow closed cylinder the outer cross section of which corresponds to the inner cross section of the cylindrical wall (203b) of the gas volume regulator (203),
and the gas volume regulator (203) is rotateably fitted into the upper portion (200a) of the gas regulating body (200) such that the gas volume regulating slot (201) of the gas regulating body (200) and the gas volume regulating slot (201) of the gas volume regulator (203) can be brought to overlap each other by rotating the gas volume regulator (203) within the gas regulating body (200); and the flexible valve (205) is secured to the circular cover (203a) of the gas volume regulator (203) such that the flexible valve (205) fills out the volume of the gas volume regulator (203).

2. The pressure regulating device according to claim 1, wherein the gas regulating body (200) comprises a lower portion (200b) and an anti-swell valve assembly (199) comprising:
- a perforated plate (210) arranged in the lower portion (200b),
- a valve plate (207) having a valve seat (208), the valve plate (207) being arranged in lower portion (200b) above the perforated plate (210) and spaced apart thereform, whereby an inner space (200c) is formed in the lower portion (200b), and
- a ball valve (209) having a smaller density than the density of water and being disposed in the inner space (200c) for closing off the valve seat (208).

3. The pressure regulating device according to claim 2, wherein the valve plate (207) is of a conical shape and the valve seat (208) is at the top of the cone.

4. The pressure regulating device according to any of claims 1 to 3, wherein the flexible valve (205) is provide with loading weight (214) at its lower perimeter (205d), preferably inside a seam edge.

5. The pressure regulating device according to any of claims 1 to 4, wherein the flexible valve (205) has a gas opening (217) on its mantle (205b).

6. The pressure regulating device according to any of claims 1 to 5, wherein a fastening cover (204) is arranged adjacent a cylinder top (205a) of the flexible valve (205) and the flexible valve (205) is affixed to the gas volume regulator (203) by attaching the fastening cover (204) to the circular cover (203a) of the gas volume regulator (203).

7. The pressure regulating device according to any of claims 1 to 6, wherein an outer cover (202) is provided having a covering top (202a) and a cylindrical wall (202b) projecting downwardly therefrom, and the covering top (202a) is attached to the circular cover (203a) of the gas volume regulator (203), whereby a vent (206) is formed outside the upper portion (200a) of the gas regulating body (200).

8. Use of the pressure regulating device according to any of claims 2 to 7 in a closed sewage network for regulating gas pressure and controlling fluid swelling.
